# EUROPÄISCHE PATENTSCHRIFT

(11) **EP 3 430 357 B1**
(45) Veröffentlichungstag und Bekanntmachung des Hinweises auf die Patenterteilung: **31.07.2024**
(21) Anmeldenummer: 17706451.6
(22) Anmeldetag: 21.02.2017
(51) Int. Cl.: G01C 21/34

(54) **SYSTEM UND VERFAHREN ZUR NAVIGATION EINES FAHRZEUGS**
SYSTEM AND METHOD FOR NAVIGATING A VEHICLE
SYSTÈME ET PROCÉDÉ POUR ASSURER LA NAVIGATION D'UN VÉHICULE

(30) Priorität: 16.03.2016 DE 102016204377
(43) Veröffentlichungstag der Anmeldung: 23.01.2019
(73) Patentinhaber: Bayerische Motoren Werke Aktiengesellschaft, 80809 München (DE)
(72) Erfinder: TAVA, Marcello, 81369 München (DE)
(86) Internationale Anmeldenummer: PCT/EP2017/053823
(87) Internationale Veröffentlichungsnummer: WO 2017/157618

(56) Entgegenhaltungen:
- WO-A1-2015/024126
- DE-A1- 102005 013 556
- JP-A- 2004 053 492

## Beschreibung

Die vorliegende Erfindung betrifft ein System und ein Verfahren zur Navigation eines Fahrzeugs.

Um Fahrzeugnutzern die Benutzung von Fahrzeugen zu erleichtern, sind Navigationsgeräte, d.h. Navigationseinheiten, weit verbreitet. Diese Navigationsgeräte nehmen dem Fahrzeugnutzer die Routenplanung ab, indem sie, ausgehend von dem aktuellen Standort des mit dem Navigationsgerät ausgestatteten Fahrzeugs und des festgelegten Ziels und, in manchen Fällen, optional eingegebener Routenpunkte (Points of Interest, POI) die kürzeste, schnellste oder bequemste Route anhand eines gespeicherten Straßennetzes berechnen und dem Fahrzeugnutzer anzeigen. Insbesondere werden auf das Straßennetz bezogene Verkehrsregeln, beispielsweise das Befahren von Einbahnstraßen in nur eine Richtung, das Durchfahren eines Kreisels entgegen des Uhrzeigersinns etc., in die Routenplanung mit einbezogen.

Weitere Funktionen solcher Navigationsgeräte basieren auf der Einbeziehung von Echtzeitinformation, beispielsweise zum Straßennetz oder der Verkehrslage, die dem Navigationsgerät über Funk zugänglich ist, zum Beispiel durch einen Verkehrslagendienst (Real Time Traffic Information, RTTI). Wird etwa ein Stau auf der durch das Navigationsgerät geplanten Route identifiziert, so kann nach einer neuen, den Stau umgehenden und dadurch schnelleren Route gesucht werden. Ebenso kann im Falle einer Straßensperrung einer nach der geplanten Route zu nutzenden Straße eine alternative Routenführung, welche die gesperrte Straße umgeht, geplant werden. Darüber hinaus kann der Fahrzeugnutzer durch solche Funktionen eines Navigationsgeräts auch auf bestimmte, auf der geplanten Route liegende Gefahren, z.B. durch Eisglätte, aufmerksam gemacht werden.

In JP 2004 053 492 A ist eine Navigationseinrichtung beschrieben, bei dem für die Navigation Verkehrsregeln berücksichtigt werden. Dabei werden Informationen über Verkehrsregeln für ein bestimmtes Fahrzeug beurteilt, die in einem Speichermittel gespeichert sind, anhand von Informationen, die Merkmale eines installierten Fahrzeugs angeben, und auf der Grundlage des Beurteilungsergebnisses wird die Anzeige von Verkehrsregeln auf einer Karte des Fahrzeugs umgeschaltet, wodurch ein Benutzer unter Berücksichtigung der auf das spezifische Fahrzeug beschränkten Verkehrsregeln geführt wird.

In DE 10 2005 013 556 A1 wird eine Vorrichtung zum Festlegen und Anzeigen einer optimalen Route und insbesondere eine Vorrichtung, die eine Erhebung von Stra-ßenbenutzungsgebühren berücksichtigt, wenn sie die Route anzeigt, beschrieben.

In WO 2015 024 126 A1 ist ein System zur Steuerung, Überprüfung und Mauterfassung eines Verkehrsflusses unter Verwendung eines GPS-fähigen Smartphones beschrieben.

Es ist Aufgabe der Erfindung, die Routenplanung durch ein Navigationssystem, welches bei der Routenplanung Fahrzeuginformation des das Navigationssystem nutzenden Fahrzeugs in der Routenplanung berücksichtigt, zu verbessern, indem auf Fahrzeuginformation bezogene Verkehrsregeln in die Routenplanung mit einbezogen werden. Insbesondere soll dadurch die Benutzung eines Systems zur Navigation, welches ein Navigationsgerät, d.h. eine Navigationseinheit, aufweist, komfortabler und sicherer gemacht werden.

Diese Aufgabe wird durch das System und Verfahren zur Navigation eines Fahrzeugs gemäß den unabhängigen Ansprüchen gelöst.

Das erfindungsgemäße System zur Navigation eines Fahrzeugs gemäß einem ersten Aspekt der Erfindung weist insbesondere eine externe bzw. außerhalb des Fahrzeugs angeordnete Verwaltungseinheit zur Speicherung von Fahrzeuginformation und von auf Fahrzeuginformation bezogene Verkehrsregeln, wobei die Verkehrsregeln insbesondere die Sperrung von Straßen betreffen und der Fahrzeuginformation zugeordnet sind, und eine Erfassungseinheit, welche eine Schnittstelle zum Erfassen von Fahrzeuginformation des Fahrzeugs, welche mindestens eine Fahrzeugidentifikationsnummer enthält, aufweist, und welche dazu ausgebildet ist, die erfassten Fahrzeuginformation des Fahrzeugs an die Verwaltungseinheit zu senden, auf. Das System weist zusätzlich ein Berechnungsmodul zur Berechnung von Navigationsinformation, d. h. zur Routenplanung auf, welches dazu ausgebildet ist, auf der Verwaltungseinheit gespeicherte, auf Fahrzeuginformation des Fahrzeugs bezogene Verkehrsregeln in die Berechnung der Navigationsinformation mit einzubeziehen, und eine Navigationseinheit im Fahrzeug zur Ausgabe von durch das Berechnungsmodul berechneter Navigationsinformation, wobei die Navigationseinheit eine Schnittstelle aufweist, die dazu ausgebildet ist, die Fahrzeugidentifikationsnummer zu erfassen und zu speichern, und die Navigationseinheit dazu eingerichtet ist, ein Anfragesignal, welches die Fahrzeugidentifikationsnummer enthält, an die Verwaltungseinheit zu senden.

Das erfindungsgemäße Verfahren zur Navigation eines Fahrzeugs gemäß einem zweiten Aspekt der Erfindung weist insbesondere folgende Arbeitsschritte auf: Erfassen von Fahrzeuginformation des Fahrzeugs, welche mindestens eine Identifikationsnummer enthält, durch eine Erfassungseinheit; Senden der erfassten Fahrzeuginformation des Fahrzeugs an eine externe Verwaltungseinheit, auf welcher auf Fahrzeuginformation bezogene Verkehrsregeln gespeichert sind; Speichern der erfassten Fahrzeuginformation des Fahrzeugs auf der Verwaltungseinheit; Zuordnen der Verkehrsregeln zu der Fahrzeuginformation; Erfassen und Speichern der Fahrzeugidentifikationsnummer mittels einer Schnittstelle einer im Fahrzeug angeordneten Navigationseinheit; Senden eines Anfragesignals, welches die Fahrzeugidentifikationsnummer enthält, an die Verwaltungseinheit; Berechnen von Navigationsinformation, d. h. Routenplanung, unter Berücksichtigung der auf der Verwaltungseinheit gespeicherten, auf Fahrzeuginformation des Fahrzeugs bezogenen Verkehrsregeln durch ein Berechnungsmodul; und Ausgeben der durch das Berechnungsmodul berechneten Navigationsinformation durch die Navigationseinheit im Fahrzeug.

Ein Fahrzeug, insbesondere Kraftfahrzeug, kann ein erfindungsgemäßes Navigationssystem aufweisen.

Eine Verwaltungseinheit im Sinne der Erfindung ist eine Vorrichtung zum Ablegen, insbesondere Speichern, und Organisieren, insbesondere Lesen, Kopieren, Verschieben, Durchsuchen und/oder Löschen, von Information, insbesondere Fahrzeuginformation und auf Fahrzeuginformation bezogene Verkehrsregeln. Die Information ist dabei vorzugsweise in einer Datenbank geordnet und/oder verknüpft. Die Verwaltungseinheit ist dazu ausgebildet, einen Zugriff auf die abgelegte Information zu ermöglichen bzw. die abgelegte Information auf eine Anfrage hin zu senden, vorzugsweise über ein Netzwerk, insbesondere das Internet. Die Verwaltungseinheit ist insbesondere als Server oder Rechenzentrum ausgebildet.

Eine Erfassungseinheit im Sinne der Erfindung ist eine Vorrichtung zum Aufnehmen, d.h. Erfassen, von Fahrzeuginformation eines Fahrzeugs Vorzugsweise erfolgt die Aufnahme dabei manuell oder semimanuell durch den Benutzer. Die Erfassungseinheit ist dabei insbesondere als Internetportal, welches von jedem Computer mit Internetschluss aus zugänglich ist, oder als Bauteil eines Navigationsgerätes mit einer Benutzerschnittstelle ausgebildet. Insbesondere gibt der Benutzer die Fahrzeuginformation des Fahrzeugs dazu entsprechend einer Eingabemaske des Internetportals bzw. der Benutzerschnittstelle ein. Vorzugsweise ist die Erfassungseinheit als Kamera ausgebildet, so dass die Fahrzeuginformation oder zumindest ein Teil der Fahrzeuginformation visuell aufgenommen und in einer bevorzugten Ausbildung digital ausgelesen werden kann. Weiter vorzugsweise erfolgt die Aufnahme automatisch, insbesondere wenn die Erfassungseinheit als Modul eines Navigationsgerätes oder eines Fahrzeugs ausgebildet ist und direkten Zugriff auf Fahrzeuginformation des Fahrzeugs hat, die insbesondere in einem Speicher des Fahrzeugs gespeichert ist. Alternativ oder zusätzlich ist die Erfassungseinheit dazu ausgebildet, die Fahrzeuginformation drahtlos, insbesondere über Funksignale, zu erfassen, insbesondere wenn die Fahrzeuginformation auf im oder am Fahrzeug, insbesondere im Nummernschild des Fahrzeugs, vorgesehenen integrierten Schaltkreisen, welche zur Speicherung und zum drahtlosen Senden der Fahrzeuginformation ausgebildet sind, abgelegt ist.

Ein Berechnungsmodul im Sinne der Erfindung ist eine Vorrichtung zum Berechnen und/oder Planen einer Route basierend auf grundlegenden Eingaben eines Benutzers. Solch grundlegende Eingaben betreffen insbesondere Zielort, Zwischenziele und/oder Planungsparameter, beispielsweise Ausschluss einer Straßenart wie Autobahn oder Landstraße, Umfahrung von Ortschaften, Wegstreckenminimierung, Zeitminimierung und ähnlichem. Darüber hinaus muss dem Berechnungsmodul der aktuelle Standort des Fahrzeugs, für welches die Route berechnet werden soll, zur Verfügung gestellt werden, insbesondere durch ein System zur Satellitennavigation. Anhand dieser Information kann das Berechnungsmodul eine bezüglich der Planungsparameter optimierte Route basierend auf einer Karte des Straßennetzes, welche dem Berechnungsmodul zur Verfügung steht, insbesondere durch Ablage in einem Speicher, berechnen. Die Karte des Straßennetzes wird vorzugsweise durch Aktualisierungen auf dem neusten Stand gehalten.

Eine Navigationseinheit im Sinne der Erfindung ist eine Vorrichtung zur Ausgabe von Navigationsinformation, d.h. Routeninformation einer geplanten und/oder berechneten Route, in einem Fahrzeug. Die Ausgabe wird insbesondere durch Anzeige auf einer Anzeigevorrichtung, beispielsweise einem Display, oder durch akustische Anweisungen umgesetzt, die den Fahrzeugnutzer entlang der berechneten Route lotsen bzw. leiten. Vorzugsweise ist die Navigationseinheit eine modulare Ausstattung eines Fahrzeugs, d.h. es ist ein einfacher Ein- und/oder Ausbau möglich. Insbesondere ist ein einfacher Umbau von einem Fahrzeug in ein anderes Fahrzeug möglich, so dass die Navigationseinheit flexibel verwendet werden kann. Weiter vorzugsweise ist die Navigationseinheit fest in ein Fahrzeug integriert, so dass sie besonders einfach auf Daten in einem Speicher des Fahrzeugs, wo insbesondere Fahrzeuginformation, beispielsweise Motorspezifikationen und/oder Fahrzeugkennzeichen, gespeichert ist, zugreifen kann.

Die Erfindung basiert auf dem Ansatz, die Fahrzeuginformation eines Fahrzeugs, welche mindestens eine Fahrzeugidentifikationsnummer enthält, beispielsweise Fahrzeugkennzeichen und/oder Motorspezifikation und/oder Fahrzeuglänge und/oder -breite und/oder Fahrzeuggewicht und/oder Schadstoffausstoß und/oder Kraftstoffverbrauch etc., auf einer externen Verwaltungseinheit, beispielsweise einem Server oder einem Rechenzentrum, zu hinterlegen. Gleichzeitig enthält diese Verwaltungseinheit Verkehrsregeln oder hat Zugriff auf Verkehrsregeln, welche sich auf Fahrzeuginformation beziehen, d.h. die nur für Fahrzeuge, welche bestimmte, in den Fahrzeuginformation enthaltene, Merkmale aufweisen, gültig sind.

Durch die Zusammenführung von Fahrzeuginformation und auf Fahrzeuginformation bezogene Verkehrsregeln kann Navigationsinformation berechnet, d.h. eine Route geplant, werden, in welche bzw. welchen die auf Fahrzeuginformation des Fahrzeugs bezogenen Verkehrsregeln mit eingehen, d.h. berücksichtigt werden. Diese Navigationsinformation wird von einem Navigationsgerät im Fahrzeug ausgegeben, beispielsweise auf einem Display angezeigt und/oder per akustischem Signal zugänglich gemacht.

Solche auf Fahrzeuginformation bezogene Verkehrsregeln können beispielsweise die Sperrung von Straßen für bestimmte Fahrzeugkennzeichen zu bestimmten Zeiten umfassen, um das Verkehrsaufkommen auf bestimmten Strecken zu regulieren. Solch eine Regulierung ist vor allem in Ballungsräumen mit einer hohen Fahrzeugdichte vorteilhaft. Demnach ist es beispielsweise Fahrzeugen mit ungeraden Fahrzeugkennzeichen nicht erlaubt, eine bestimmte Straße an ungeraden Tagen wie 1. März, 3. März, etc., zu befahren, Fahrzeugen mit geraden Kennzeichen dagegen nicht erlaubt, diese bestimmte Straße an geraden Tagen wie 2. März, 4. März, etc., zu befahren. Nach einer anderen beispielhaften, auf Fahrzeuginformation bezogenen Verkehrsregel dürfen zu bestimmten Tageszeit Autos mit einem Schadstoffausstoß über einer festgelegten Grenze eine bestimmte Straße nicht befahren. In einer vorteilhaften Ausführung der Erfindung werden solche gesperrten Straßen graphisch auf dem Display der Navigationseinheit markiert bzw. indiziert und bei der Routenplanung nicht berücksichtigt bzw. von dieser ausgeschlossen. Insbesondere können die aufgrund von auf Fahrzeuginformation bezogenen Verkehrsregeln gesperrten Straßen anders markiert bzw. indiziert sein als gesperrte Straßen, die für jeden Verkehrsteilnehmer, d.h. unabhängig von Verkehrsregeln, die sich auf Fahrzeuginformation beziehen, gesperrt sind.

Da solche auf Fahrzeuginformation bezogenen Verkehrsregeln komplex sein können und sich möglicherweise häufig ändern, ist es in einem Navigationssystem, welches solche auf Fahrzeuginformation bezogenen Verkehrsregeln in die Routenplanung, d.h. die Berechnung von Navigationsinformation, mit einbezieht, deshalb vorteilhaft, diese auf Fahrzeuginformation bezogenen Verkehrsregeln zentral auf der Verwaltungseinheit abzulegen, da sie dort einfach und direkt geändert bzw. aktualisiert werden können und, beispielsweise über eine Kommunikationsverbindung, allen das Benutzern des Navigationssystems zur Verfügung stehen, ohne dass diese eine Aktualisierung ihrer Navigationseinheit im Fahrzeug durchführen müssen.

Dadurch, dass die Navigationseinheit eine Schnittstelle aufweist, die dazu ausgebildet ist, die Fahrzeugidentifikationsnummer zu erfassen und zu speichern ist es möglich, die Navigationseinheit besonders einfach und zuverlässig dem Fahrzeug und den auf die Fahrzeuginformation des Fahrzeugs bezogenen Verkehrsregeln zuzuordnen.

Die Erfindung ermöglicht es insbesondere, dass die Navigationsinformation von demselben Ausgangspunkt zum selben Ziel für unterschiedliche Nutzer des Navigationssystems unterschiedlich ausfällt, d.h. unterschiedliche Navigationseinheiten geben in diesem Fall unterschiedliche Navigationsinformation aus, bzw. dass die Navigationsinformation für den gleichen Nutzer von demselben Ausgangspunkt zum selben Ziel zu unterschiedlichen Zeiten unterschiedlich ausfällt.

Insgesamt ermöglicht die Erfindung die Navigation eines Fahrzeugs unter Berücksichtigung von auf Fahrzeuginformation bezogenen Verkehrsregeln auf eine einfache und zuverlässige Weise.

In einer weiteren vorteilhaften Ausgestaltung des Systems gemäß dem ersten Aspekt der Erfindung ist die Navigationseinheit dazu ausgebildet, eine Kommunikationsverbindung mit der Verwaltungseinheit aufzubauen und dabei mindestens die gespeicherte Fahrzeugidentifikationsnummer zur Identifikation des Fahrzeugs durch die Verwaltungseinheit zu übertragen. Insbesondere kann die Navigationseinheit eine drahtlose Kommunikationsverbindung mit der Verwaltungseinheit herstellen, beispielsweise über einen Funkstandart wie UMTS, HSPA oder LTE. Dadurch wird die Navigationseinheit dem Fahrzeug und den auf die Fahrzeuginformation des Fahrzeugs bezogenen Verkehrsregeln noch einfacher und zuverlässiger zugeordnet.

In einer weiteren vorteilhaften Ausgestaltung des Systems gemäß dem ersten Aspekt der Erfindung weist die Verwaltungseinheit das Berechnungsmodul auf, wobei die Navigationseinheit dazu ausgebildet ist, die von dem Berechnungsmodul unter Einbeziehung der auf Fahrzeuginformation des Fahrzeugs bezogenen Verkehrsregeln berechnete Navigationsinformation zu empfangen. Dadurch werden die Anforderungen an die Rechenleistung des Navigationsgerätes gering gehalten, so dass eine kostengünstige Herstellung möglich ist. Im gleichen Zug ist es möglich, das Berechnungsmodul der Verwaltungseinheit aufwändig zu konstruieren und eine hohe Rechenleistung sicherzustellen. Somit kann die zu berechnende Navigationsinformation unter Einbeziehung von auf Fahrzeuginformation bezogenen Verkehrsregeln besonders effizient und schnell berechnet werden. Durch zentrale, jeweils nur einmal durchzuführende Aktualisierungen der auf Fahrzeuginformation bezogenen Verkehrsregeln wird eine besonders zuverlässige Navigation eines Fahrzeugs unter Einbeziehung von auf Fahrzeuginformation des Fahrzeugs bezogene Verkehrsregeln gewährleistet.

In einer weiteren vorteilhaften Ausgestaltung des Systems gemäß dem ersten Aspekt der Erfindung weist die Navigationseinheit das Berechnungsmodul auf und ist dazu ausgebildet, die von der Verwaltungseinheit gespeicherten, auf Fahrzeuginformation des Fahrzeugs bezogenen Verkehrsregeln zu empfangen. Dadurch wird der Datenverkehr über die Kommunikationsverbindung zwischen Navigationseinheit und Verwaltungseinheit möglichst gering gehalten, da nur einzelne, von auf Fahrzeuginformation des Fahrzeugs bezogenen Verkehrsregeln betroffene Straßen und die entsprechenden Verkehrsregeln an das Navigationsgerät gesendet werden müssen.

In einer weiteren vorteilhaften Ausgestaltung des Systems gemäß dem ersten Aspekt der Erfindung ist die Erfassungseinheit dazu ausgebildet, ein Fahrzeugkennzeichen als Fahrzeugidentifikationsnummer zu erfassen oder neben der Fahrzeugidentifikationsnummer ein Fahrzeugkennzeichen als Fahrzeuginformation zu erfassen. Dadurch können insbesondere auf das Fahrzeugkennzeichen eines Fahrzeugs bezogene Verkehrsregeln bei der Berechnung der Navigationsinformation berücksichtigt werden. Darüber hinaus ist es für die Verwaltungseinheit über das Fahrzeugkennzeichen als Fahrzeugidentifikationsnummer besonders einfach, ein bestimmtes Fahrzeug zu identifizieren, um ihm die entsprechenden auf das Fahrzeug bezogenen Verkehrsregeln zuzuweisen.

In einer weiteren vorteilhaften Ausgestaltung des Systems gemäß dem ersten Aspekt der Erfindung ist die Erfassungseinheit dazu ausgebildet, neben der Fahrzeugidentifikationsnummer mindestens eine Motorspezifikation als Fahrzeuginformation zu erfassen. Dadurch können insbesondere auf Motorspezifikationen eines Fahrzeugs bezogene Verkehrsregeln bei der Berechnung der Navigationsinformation berücksichtigt werden.

In einer weiteren vorteilhaften Ausgestaltung des Systems gemäß dem ersten Aspekt der Erfindung ist die Schnittstelle der Eingabeeinheit als Eingabemaske eines Internetportals ausgebildet. Dies ist für den Fahrzeugnutzer komfortabel, da er die Fahrzeuginformation des Fahrzeugs zu jeder beliebigen Zeit an jedem beliebigen Ort eingeben und/oder ändern kann.

In einer weiteren vorteilhaften Ausgestaltung des Systems gemäß dem ersten Aspekt der Erfindung weist die Navigationseinheit eine Erfassungseinheit auf. Dadurch kann der Fahrzeugnutzer die Fahrzeuginformation über die Schnittstelle direkt an der Navigationseinheit im Fahrzeug erfassen lassen. Dies geschieht durch Eingabe der Fahrzeuginformation in die Erfassungseinheit, insbesondere eine Benutzerschnittstelle, oder durch Auslesen der Fahrzeuginformation durch die Erfassungseinheit, insbesondere eine Kamera. Alternativ oder zusätzlich ist die Schnittstelle der Erfassungseinheit als Empfangsmodul ausgebildet, welches Fahrzeuginformation drahtlos, insbesondere durch ein Funksignal, empfangen kann. Dies ist besonders vorteilhaft, wenn die Fahrzeuginformation auf einem integrierten Schaltkreis, insbesondere einem Mikrochip, vorliegt, der an oder in dem Fahrzeug, insbesondere im Nummernschild des Fahrzeugs, vorgesehen ist, welcher dazu ausgebildet ist, die Fahrzeuginformation durch ein Funksignal an die Erfassungseinheit zu senden. Diese bevorzugte Ausführung ist besonders komfortabel für den Fahrzeugnutzer und überdies besonders zuverlässig.

Die in Bezug auf ein System gemäß dem ersten Aspekt der Erfindung beschriebenen Merkmale und Vorteile gelten für ein Verfahren gemäß dem zweiten Aspekt der Erfindung entsprechend und umgekehrt.

In einer bevorzugten Ausgestaltung des Verfahrens zur Navigation eines Fahrzeugs sendet die Navigationseinheit im Fahrzeug eine Anfrage zum Berechnen und Senden von Navigationsinformation, welche auf Fahrzeuginformation des Fahrzeugs bezogene Verkehrsregeln berücksichtigen, an die Verwaltungseinheit, woraufhin das Berechnungsmodul der Verwaltungseinheit die Navigationsinformation unter Berücksichtigung der auf Fahrzeuginformation des Fahrzeugs bezogenen Verkehrsregeln berechnet und an die Navigationseinheit sendet. Dadurch werden die Anforderungen an die Rechenleistung des Navigationsgerätes gering gehalten, so dass eine kostengünstige Herstellung möglich ist. Im gleichen Zug ist es möglich, das Berechnungsmodul der Verwaltungseinheit aufwändig zu konstruieren und insbesondere durch zentrale, jeweils nur einmal durchzuführende Aktualisierungen eine hohe Rechenleistung sicherzustellen. Somit kann die zu berechnenden Navigationsinformation unter Einbeziehung von auf Fahrzeuginformation bezogenen Verkehrsregeln besonders effizient und schnell berechnet werden.

In einer weiteren Ausgestaltung des Verfahrens zur Navigation eines Fahrzeugs sendet die Navigationseinheit im Fahrzeug eine Anfrage zum Senden von auf der Verwaltungseinheit gespeicherten, auf Fahrzeuginformation des Fahrzeugs bezogene Verkehrsregeln durch die Verwaltungseinheit an die Verwaltungseinheit, woraufhin die Verwaltungseinheit auf Fahrzeuginformation des Fahrzeugs bezogene Verkehrsregeln an die Navigationseinheit sendet und das Berechnungsmodul der Navigationseinheit die Navigationsinformation unter Berücksichtigung der empfangenen, auf Fahrzeuginformation des Fahrzeugs bezogenen Verkehrsregeln berechnet. Dadurch wird der Datenverkehr zwischen Navigationseinheit und Verwaltungseinheit möglichst gering gehalten, da nur einzelne, von auf Fahrzeuginformation des Fahrzeugs bezogenen Verkehrsregeln betroffene Straßen und die entsprechenden Verkehrsregeln an das Navigationsgerät gesendet werden müssen.

In einer weiteren bevorzugten Ausgestaltung des Verfahrens zur Navigation eines Fahrzeugs sendet die Navigationseinheit die Identifikationsnummer des Fahrzeugs zusammen mit der Anfrage. Die Verwaltungseinheit identifiziert die auf Fahrzeuginformation des Fahrzeugs bezogenen Verkehrsregeln anhand der Fahrzeugidentifikationsnummer und sendet diese daraufhin an die Navigationseinheit oder Berechnet unter deren Berücksichtigung Navigationsinformation durch das Berechnungsmodul und sendet diese anschließend an die Navigationseinheit.

In einer weiteren bevorzugten Ausgestaltung des Verfahrens werden aktuelle, auf Fahrzeuginformation bezogene Verkehrsregeln auf der Verwaltungseinheit gespeichert.

Weitere Merkmale, Vorteile und Anwendungsmöglichkeiten der Erfindung ergeben sich aus der nachfolgenden Beschreibung im Zusammenhang mit den Figuren. Es zeigen wenigstens teilweise schematisch:
- Fig. 1: eine erste Ausführungsform eines Systems zur Navigation eines Fahrzeugs;
- Fig. 2: eine zweite Ausführungsform eines Systems zur Navigation eines Fahrzeugs;
- Fig. 3: eine dritte Ausführungsform eines Systems zur Navigation eines Fahrzeugs; und
- Fig. 4: eine erste Ausführungsform eines Verfahrens zur Navigation eines Fahrzeugs.

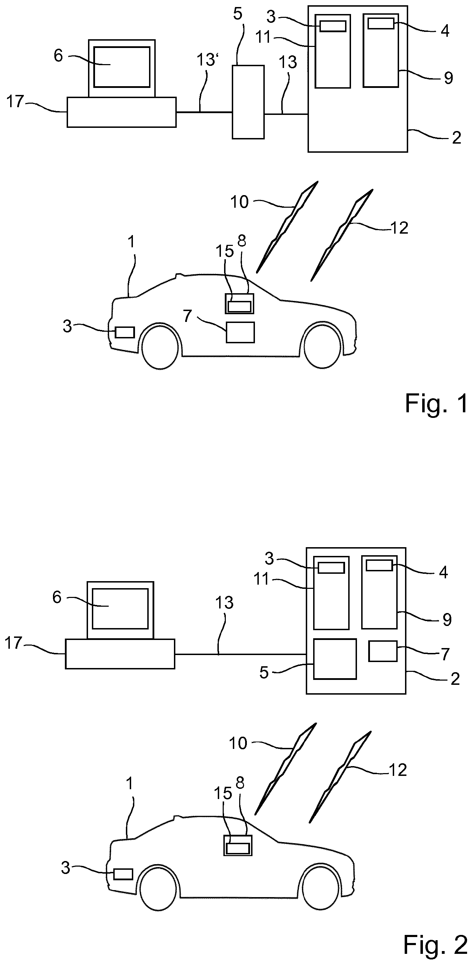

Fig. 1 zeigt eine erste Ausführungsform zur Navigation eines Fahrzeugs 1. Das Fahrzeug 1 weist ein Berechnungsmodul 7 auf, welches insbesondere Navigationsinformation in einem Verfahrensschritt 106 berechnen kann. Zu diesem Zweck werden dem Berechnungsmodul 7 zunächst Navigationsdaten übermittelt, erfindungsgemäß wenigstens ein Standort des Fahrzeugs und ein Zielort, vorzugsweise zusätzlich bevorzugte Straßenarten wie Autobahn, Landstraße, etc., und der bevorzugte Navigationsmodus des Nutzers wie schnellste Strecke, kürzeste Strecke, schönste Strecke, etc. Die Eingabe dieser Navigationsdaten geschieht bevorzugt über eine Schnittstelle 15. Vorzugsweise ist die Schnittstelle 15 Teil einer Navigationseinheit 8, welche dazu ausgebildet ist, die Navigationsdaten an das Berechnungsmodul 7 zu übermitteln. Vorzugsweise ist die Navigationseinheit 8 dazu ausgebildet, den Standort des Fahrzeugs 1 zu ermitteln, beispielsweise per Satellitennavigation. Dem Berechnungsmodul 7 steht ferner eine Karte des Straßennetzes zur Verfügung, auf deren Grundlage die Navigationsinformation in Verfahrensschritt 106 berechnet werden kann. Die berechnete Navigationsinformation wird bevorzugt an die Navigationseinheit 8 übermittelt und durch die Navigationseinheit 8 in Verfahrensschritt 107 ausgegeben, insbesondere visuell als Anweisungen auf einer Anzeigeeinheit und/oder akustisch.

Das Berechnungsmodul 7 ist dazu ausgebildet, zusätzlich zu den Navigationsdaten auf Fahrzeuginformation 3 des Fahrzeugs 1 bezogene Verkehrsregeln 4 in die Berechnung der Navigationsinformation in Verfahrensschritt 106 mit einzubeziehen. Diese Verkehrsregeln 4 können insbesondere die Sperrung und/oder Geschwindigkeitsbegrenzungen ausgewählter Straßen für Fahrzeuge mit bestimmten Fahrzeugkennzeichen und/oder Motorspezifikationen und/oder Fahrzeugmaßen und/oder Fahrzeuggewicht und/oder Schadstoffausstoß und/oder Kraftstoffverbrauch betreffen. Insbesondere können diese Verkehrsregeln 4 eine zeitlich begrenzte Gültigkeit aufweisen, d.h. insbesondere nur an ausgewählten Tagen wie Wochenenden, Feiertagen, geraden oder ungeraden Kalenderwochen, geraden oder ungeraden Tagen im Monat, im Berufsverkehr, etc., gültig sein. Ferner bevorzugt können die Verkehrsregeln 4 Fahrzeuge mit bestimmten Kennzeichenmerkmalen betreffen, beispielsweise Fahrzeuge mit geradem oder ungeradem Kennzeichen oder Fahrzeuge mit einem Kennzeichen, dessen Ziffern eine Nummer bilden, die größer oder kleiner als ein definierter Grenzwert bzw. Teil einer Gruppe von Nummern ist.

Vorzugsweise ist auch das Berechnungsmodul 7 ein Teil der Navigationseinheit 8. Die auf Fahrzeuginformation 3 des Fahrzeugs 1 bezogenen Verkehrsregeln 4 sind auf einer Verwaltungseinheit 2 in einem dafür vorgesehenen Verkehrsregelspeicher 9 abgelegt. Die Verwaltungseinheit 2 befindet sich außerhalb des Fahrzeugs 1. Insbesondere ist die Verwaltungseinheit 2 ortsgebunden. Vorzugsweise ist die Verwaltungseinheit 2 als Server bzw. Rechenzentrum ausgebildet. Um Zugriff auf die auf Fahrzeuginformation 3 des Fahrzeugs 1 bezogenen Verkehrsregeln 4 zu erhalten, sendet das Fahrzeug 1 bzw. die Navigationseinheit 8 in Verfahrensschritt 104 ein Anfragesignal 10, insbesondere über eine drahtlose Verbindung wie GSM, UMTS oder LTE, bzw. eine drahtlose Internetverbindung über einen dieser Funkstandards, an die Verwaltungseinheit 2. Das Anfragesignal 10 enthält Fahrzeuginformation 3 des Fahrzeugs 1, welche mindestens eine Fahrzeugidentifikationsnummer enthält, über die das Anfragesignal 10 bzw. Fahrzeuginformation 3 dem Fahrzeug 1 zugeordnet werden kann. Vorzugsweise ist die mit dem Anfragesignal 10 zu übertragende Fahrzeugidentifikationsnummer auf der Navigationseinheit 8 gespeichert.

In der Verwaltungseinheit 2 ist die Fahrzeuginformation 3 des Fahrzeugs 1 in einem dafür vorgesehenen Fahrzeuginformationsspeicher 11 abgelegt. Über die mit dem Anfragesignal 10 gesendeten Fahrzeuginformation 3 des Fahrzeugs 1, welche mindestens eine Fahrzeugidentifikationsnummer enthält, kann die im Fahrzeuginformationsspeicher 11 abgelegte Fahrzeuginformation 3 dem das Anfragesignal 10 sendenden Fahrzeug 1 zugeordnet werden.

In der Verwaltungseinheit 3 sind im Fahrzeuginformationsspeicher 11 und im Verkehrsregelspeicher 9 abgelegte Fahrzeuginformation 3 und auf Fahrzeuginformation 3 bezogene Verkehrsregeln 4 bevorzugt miteinander verknüpft, insbesondere in Form einer Datenbank. Insbesondere sind alle auf Fahrzeuginformation 3 bezogenen Verkehrsregeln 4 der im Fahrzeuginformationsspeicher 11 abgelegten Fahrzeuginformation 3 zugeordnet. Die Verwaltungseinheit 2 ist vorzugsweise ausgebildet, für eine bestimmte, im Fahrzeuginformationsspeicher 11 abgelegte Fahrzeuginformation 3, alle speziell diese Fahrzeuginformation 3 betreffenden Verkehrsregeln 4 in Verfahrensschritt 105 zu identifizieren und zur Verfügung zu stellen. Insbesondere können alle Verkehrsregeln 4, welche ein bestimmtes Kennzeichen und/oder Motorspezifikation und/oder Fahrzeugmaße und/oder Fahrzeuggewicht und/oder Schadstoffausstoß und/oder Kraftstoffverbrauch betreffen, identifiziert und zur Verfügung gestellt werden. Alternativ oder zusätzlich können alle Verkehrsregeln 4, welche eine bestimmte Gruppe von Kennzeichen und/oder Motorspezifikationen und/oder Fahrzeugmaßen und/oder Fahrzeuggewichten und/oder Schadstoffausstößen und/oder Kraftstoffverbrauchen betreffen, identifiziert und zur Verfügung gestellt werden.

Auf das Anfragesignal 10 hin sucht die Verwaltungseinheit 2 die Fahrzeuginformation 3 des das Anfragesignal 10 sendenden Fahrzeugs 1 im Fahrzeuginformationsspeicher 11, auf Basis der im Anfragesignal 10 enthaltenen Fahrzeugidentifikationsnummer. Auf der Grundlage dieser Fahrzeuginformation 3 identifiziert, d.h. recherchiert bzw. sammelt bzw. extrahiert bzw. findet, die Verwaltungseinheit 2 alle diese Fahrzeuginformation 3 betreffenden Verkehrsregeln 4 in Verfahrensschritt 105 und sendet diese in einem Antwortsignal 12 an das Fahrzeug 1 bzw. die Navigationseinheit 7. Dadurch stehen die auf die Fahrzeuginformation 3 des Fahrzeugs 1 bezogenen Verkehrsregeln 3 dem Berechnungsmodul 7 im Fahrzeug 1, insbesondere als Teil der Navigationseinheit 8, zur Berechnung der Navigationsinformation zur Verfügung. Insbesondere kann das Berechnungsmodul 7 nun alle Verkehrsregeln 4, welche das Fahrzeug 1 bzw. dessen Fahrer aufgrund der Fahrzeuginformation 3, d.h. Beschaffenheit bzw. der Eigenschaften, des Fahrzeugs 1 beachten muss, in die Berechnung der Navigationsinformation, d.h. die Routenplanung, in Verfahrensschritt 106 mit einbeziehen.

Dadurch werden Straßen, welche das Fahrzeug 1 nicht befahren darf, nicht mit in die Routenplanung, d.h. die Berechnung der Navigationsinformation, mit einbezogen und vorzugsweise bei der Ausgabe der Navigationsinformation in Verfahrensschritt 107 durch die Navigationseinheit 8 markiert, beispielsweise farblich durch einen roten Rand oder durch eine ausgegraute Darstellung, insbesondere bei der Anzeige der Navigationsinformation, oder durch Schraffur oder Kreuze. Insbesondere werden die Straßen, welche das Fahrzeug 1 speziell aufgrund seiner besonderen Fahrzeuginformation 3 nicht befahren darf, in einer anderen Weise markiert als Straßen, welche für alle Fahrzeuge unabhängig von deren jeweiliger Fahrzeuginformation gesperrt sind.

Durch die Speicherung der auf Fahrzeuginformation 3 bezogenen Verkehrsregeln 4 in dem Verkehrsregelspeicher 9 auf der Verwaltungseinheit 2 können die auf Fahrzeuginformation 3 bezogenen Verkehrsregeln 4 besonders einfach aktualisiert, d.h. auf dem neusten Stand gehalten, werden. Bei einer Änderung der auf Fahrzeuginformation 3 bezogenen Verkehrsregeln 4, insbesondere aufgrund geänderter gesetzlicher Vorgaben oder durch Vorgaben des Straßenbetreibers, stehen die auf der Verwaltungseinheit 2 entsprechend aktualisierten Verkehrsregeln 4 den Berechnungsmodulen 7 umgehend zur Verfügung. Es ist insbesondere nicht notwendig, Aktualisierungen an den Berechnungsmodulen 7 in jedem einzelnen Fahrzeug 1 vorzunehmen, wenn diese Berechnungsmodule 7, insbesondere über die Navigationseinheit 8, mit der Verwaltungseinheit 2 kommunizieren können, d.h. Bestandteil des Systems zur Navigation eines Fahrzeugs 1 sind.

Um der Verwaltungseinheit die Fahrzeuginformation 3 eines Fahrzeugs 1 zur Ablage im Fahrzeuginformationsspeicher 11 und zur Verknüpfung mit auf diese Fahrzeuginformation 3 bezogenen Verkehrsregeln 4 zur Verfügung zu stellen, weist das System zur Navigation eines Fahrzeugs 1 eine Erfassungseinheit 5 auf. Die Erfassungseinheit 5 ist dazu ausgebildet, die Fahrzeuginformation 3 eines Fahrzeugs 1, welche mindestens eine Fahrzeugidentifikationsnummer enthält, in Verfahrensschritt 101 zu erfassen und der Verwaltungseinheit 2 in Verfahrensschritt 102 zur Verfügung zu stellen. Die Erfassungseinheit 5 kann als Server, insbesondere Rechenzentrum, ausgebildet sein, so dass die erfasste Fahrzeuginformation 3 über eine erste Internetverbindung 13 an die Verwaltungseinheit 2 übermittelt werden kann.

Die Erfassungseinheit 5 weist eine Schnittstelle 6 auf, über welche die Fahrzeuginformation 3 in Verfahrensschritt 101 erfasst werden kann. In der dargestellten ersten Ausführung ist dies ein Internetportal, in welches ein Nutzer die Fahrzeuginformation 3 eintragen kann. Der Nutzer kann das Internetportal über eine zweite Internetverbindung 13' nutzen, insbesondere von einem internetfähigen Gerät 17, beispielsweise von einem Heimcomputer oder einem Smartphone.

Vorzugsweise wird bei der Ubertragung der Fahrzeuginformation 3 , welche mindestens eine Fahrzeugidentifikationsnummer enthält, an die Verwaltungseinheit 2 über die erste Internetverbindung 13 in Verfahrensschritt 102 eine Fahrzeugidentifikationsnummer erzeugt und dem Nutzer angezeigt oder zur Verfügung gestellt, insbesondere in Form einer Datei, durch welche die Fahrzeuginformation 3 identifiziert und dem Fahrzeug 1 zugeordnet werden kann. Weiter vorzugsweise ist die Identifikationsnummer das Kennzeichen des Fahrzeugs 1. Dadurch kann die Fahrzeuginformation 3, welche vorzugsweise das Kennzeichen des Fahrzeugs 1 enthält, besonders einfach identifiziert und dem Fahrzeug 1 zugeordnet werden.

Die Fahrzeugidentifikationsnummer muss auch in der Navigationseinheit 8 hinterlegt, d.h. gespeichert, sein, damit eine Identifikation des Fahrzeugs 1 bzw. die Zuordnung des Anfragesignals 10 zu dem Fahrzeug 1 durch die Verwaltungseinheit 2 vorgenommen werden kann. Dazu kann der Nutzer die Fahrzeugidentifikationsnummer vorzugsweise über die Schnittstelle 15 der Navigationseinheit 8 eingeben, welche die Fahrzeugidentifikationsnummer an das Berechnungsmodul 7 überträgt bzw. dem Berechnungsmodul 7, welches vorzugsweise Teil der Navigationseinheit 8 ist, zur Verfügung stellt. Die Schnittstelle 15 des Navigationsgeräts 8 kann insbesondere als berührungsempfindliche Anzeige, physikalisches Laufwerk oder Funkempfänger ausgebildet sein. Auf diese Weise kann die Eingabe der Fahrzeugidentifikationsnummer insbesondere durch Eingabe, Einlegen eines Speichermediums, auf welchem die Fahrzeugidentifikationsnummer hinterlegt ist, oder durch ein Funksignal, welches insbesondere von einem internetfähigen Gerät 17, insbesondere einem Smartphone oder tragbaren Computer des Nutzers, an das Navigationsgerät 8 bzw. die Schnittstelle 15 gesendet wird, vorgenommen werden.

Fig. 2 zeigt eine zweite Ausführungsform eines Systems zur Navigation eines Fahrzeugs 1. Die Verwaltungseinheit 2 weist zusätzlich zu dem Verkehrsregelspeicher 9 und dem Fahrzeuginformationsspeicher 11 eine Erfassungseinheit 5 zum Erfassen von Fahrzeuginformation 3 in Verfahrensschritt 101 und ein Berechnungsmodul 7 zur Berechnung von Navigationsinformation in Verfahrensschritt 106 auf. Die als Server bzw. Rechenzentrum ausgebildete Verwaltungseinheit 2 erfasst dabei durch einen Nutzer über eine Schnittstelle 6, insbesondere ein Internetportal, eingegebene Fahrzeuginformation 3 besonders effizient. Der Nutzer hat dabei über eine erste Internetverbindung 13 von einem beliebigen internetfähigen Gerät 17 Zugriff auf das Internetportal, insbesondere von einem Heimcomputer oder einem Smartphone.

Das Berechnungsmodul 7 berechnet die Navigationsinformation unter Berücksichtigung von auf Fahrzeuginformation 3 bezogene Verkehrsregeln 4 in Verfahrensschritt 106 direkt in der Verwaltungseinheit 2. Dadurch hat das Berechnungsmodul 7 besonders einfach und zuverlässig Zugriff auf im Fahrzeuginformationsspeicher 11 und Verkehrsregelspeicher 9 abgelegte Fahrzeuginformationen 3 und auf Fahrzeuginformation 3 bezogene Verkehrsregeln 4. Die Berechnung von Navigationsinformation durch das Berechnungsmodul 7 in Verfahrensschritt 106 geschieht auf Anfrage der Navigationseinheit 8 im Fahrzeug 1 in Verfahrensschritt 104. Dazu sendet das Fahrzeug 1 bzw. die Navigationseinheit 8 ein Anfragesignal 10 an die Verwaltungseinheit 2 bzw. das Berechnungsmodul 7 in der Verwaltungseinheit 2. Das Anfragesignal 10 enthält dabei neben der Fahrzeugidentifikationsnummer zur Zuordnung der Anfrage zum Fahrzeug 1 alle zur Berechnung der Navigationsinformation notwendigen Navigationsdaten, insbesondere Standort des Fahrzeugs 1, Zielort, Routenpräferenzen des Fahrers, etc. Die vom Berechnungsmodul 7 unter Einbeziehung der Navigationsdaten und auf Fahrzeuginformation 3 bezogenen Verkehrsregeln 4 in Verfahrensschritt 106 berechnete Navigationsinformation wird in Form eines Antwortsignals 12 an das Fahrzeug 1 bzw. die Navigationseinheit 8 gesendet und von der Navigationseinheit 8 in Verfahrensschritt 107 ausgegeben. Die bei der Berechnung in Verfahrensschritt 106 verwendeten Verkehrsregeln 4 sind dabei für Fahrzeuge gültig, welche Merkmale entsprechend der im Fahrzeuginformationsspeicher 11 abgelegten Fahrzeuginformation 3 des Fahrzeugs 1, die durch das im Anfragesignal 10 enthaltene Fahrzeugidentifikationsnummer identifiziert wird, aufweisen. Dadurch wird die Navigationsinformation auf das bzw. die die Anfrage sendende Fahrzeug 1 bzw. Navigationseinheit, welche in dem zu navigierenden Fahrzeug 1 vorgesehen ist, bezogen, d.h. sie ist speziell für dieses Fahrzeug 1 gültig.

Vorzugsweise erzeugt die Verwaltungseinheit 2 beim Ablegen der Fahrzeuginformation 3 in dem Fahrzeuginformationsspeicher 11 in Verfahrensschritt 103 die Fahrzeugidentifikationsnummer, über welche dem Anfragesignal 10 die Fahrzeuginformation 3 im Fahrzeuginformationsspeicher 11 zugeordnet werden kann. Besonders vorteilhaft ist die Fahrzeugidentifikationsnummer das Kennzeichen des Fahrzeugs 1. Die Fahrzeugidentifikationsnummer wird, analog zur ersten Ausführung, an den Nutzer übermittelt, insbesondere auf dessen internetfähigem Gerät 17 angezeigt oder in einer Datei gespeichert, so dass der Nutzer die Fahrzeugidentifikationsnummer an bzw. auf sein Fahrzeug 1 bzw. die Navigationseinheit 8 in seinem Fahrzeug 1 übertragen, insbesondere eingeben kann. Vorzugsweise kann dazu die Schnittstelle 15 des Navigationsgeräts 8 genutzt werden, welche als eine der in der Beschreibung von Fig. 1 beschriebenen Ausführungsformen ausgebildet sein kann.

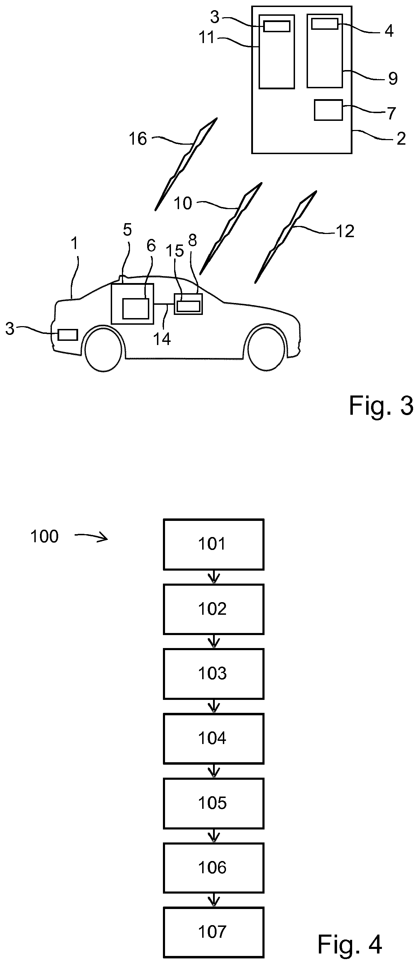

Fig. 3 zeigt eine dritte Ausführungsform eines Systems zur Navigation eines Fahrzeugs 1. Das Berechnungsmodul 7 ist dabei der Verwaltungseinheit 2 zugeordnet bzw. Teil der Verwaltungseinheit 2. Das Berechnungsmodul 7 befindet sich insbesondere außerhalb des Fahrzeugs 1. Die Erfassungseinheit 5 ist dem Fahrzeug 1 zugeordnet und über eine Verbindung 14 mit der Navigationseinheit 8 verbunden. Vorzugsweise ist die Erfassungseinheit 5 Teil der Navigationseinheit 8. Insbesondere weist die Navigationseinheit 8 eine Erfassungseinheit 5 auf.

Die Erfassungseinheit 5 erfasst die das Fahrzeug 1 betreffende Fahrzeuginformation 3 ,welche mindestens eine Fahrzeugidentifikationsnummer enthält, direkt am bzw. im Fahrzeug 1 über die Schnittstelle 6 in Verfahrensschritt 101. Besonders bevorzugt entspricht die Schnittstelle 6 der Schnittstelle 15 der Navigationseinheit 8, welche insbesondere als eine berührungsempfindliche Anzeige oder ein Spracherkennungsmodul ausgebildet ist. Weiter vorzugsweise ist die Schnittstelle 6 ein Funkempfänger, über den ein tragbarer Computer oder ein Smartphone des Nutzers, welcher bzw. welches die erfasste, d.h. eingegebene, Fahrzeuginformation 3 drahtlos über die Schnittstelle 6 der Erfassungseinheit 5 an die Erfassungseinheit 5 überträgt. Insbesondere kann die Fahrzeuginformation 3, insbesondere das Kennzeichen des Fahrzeugs 1, mit einer Kamera, insbesondere eines tragbaren Computers oder Smartphones, aufgenommen und als Bildinformation an die Erfassungseinheit 5 übertragen werden. Die Erfassungseinheit 5 ist in diesem Fall dazu ausgelegt, die Fahrzeuginformation 3 aus der Bildinformation insbesondere durch digitale Bildverarbeitung zu extrahieren.

Vorzugsweise ist die Fahrzeuginformation 3 auf einem integrierten Schaltkreis, insbesondere einem Mikrochip, abgelegt. Der Schaltkreis ist vorzugsweise Teil des Nummernschilds und weiter vorzugsweise dazu ausgebildet, die Fahrzeuginformation 3 per Funksignal an die Erfassungseinheit 5 zu senden. Weiter vorzugsweise ist die Schnittstelle 6 der Erfassungseinheit 5 dazu ausgebildet, die per Funksignal gesendete Fahrzeuginformation 3 zu empfangen.

Weiter vorzugsweise ist die Erfassungseinheit 5 direkt mit einem Speicher des Fahrzeugs 1 verbunden und kann die Fahrzeuginformation 3 direkt aus dem Speicher des Fahrzeugs 1 lesen.

Durch die Ausbildung der Erfassungseinheit 5 im Fahrzeug 1, insbesondere als Teil der Navigationseinheit 8, ist es besonders komfortabel und einfach möglich, Fahrzeuginformation 3 des Fahrzeugs 1 in Verfahrensschritt 101 zu erfassen und in Verfahrensschritt 102 an die Verwaltungseinheit 2 zu senden.

Die in bzw. von der Erfassungseinheit 5 in Verfahrensschritt 101 erfasste Fahrzeuginformation 3 des Fahrzeugs 1 wird in Verfahrensschritt 102 drahtlos, insbesondere über die Navigationseinheit 8, an die Verwaltungseinheit 2 zusammen mit einer Fahrzeugidentifikationsnummer, welche insbesondere das Kennzeichen des Fahrzeugs 1 sein kann, gesendet. Dies kann insbesondere über ein separates Informationssignal 16, beispielsweise ein GSM-, UMTS oder LTE-Funksignal und/oder eine drahtlose Internetverbindung, geschehen. Die gesendete Fahrzeuginformation 3 wird daraufhin in dem Fahrzeuginformationsspeicher 11 der Verwaltungseinrichtung 2 in Verfahrensschritt 103 abgelegt und steht dort zur Identifikation von auf diese Fahrzeuginformation 3 bezogenen Verkehrsregeln 4 zur Verfügung. Alternativ oder zusätzlich kann die von der Erfassungseinheit erfasste Fahrzeuginformation 3, insbesondere mit einer Fahrzeugidentifikationsnummer, mit dem Anfragesignal 10 an die Verwaltungseinheit 2 gesendet werden.

Dadurch können wie in der in Fig. 2 gezeigten zweiten Ausführungsform und im zugehörigen Text erläutert auf ein vom Fahrzeug 1 bzw. der Navigationseinheit 8 in Verfahrensschritt 104 gesendetes Anfragesignal 10 hin auf Fahrzeuginformation 3 des die Anfrage sendenden Fahrzeugs 1 bezogene Verkehrsregeln 4 in Verfahrensschritt 105 identifiziert und zur Verfügung gestellt, Navigationsinformation von dem Berechnungsmodul 7 in Verfahrensschritt 106 berechnet und durch ein Antwortsignal 12 an das Fahrzeug 1 bzw. die Navigationseinheit 8 des Fahrzeugs 1 gesendet werden, wo die Navigationsinformation durch die Navigationseinheit 8 in Verfahrensschritt 107 ausgegeben wird.

### Bezugszeichenliste

- 1: Fahrzeug
- 2: Verwaltungseinheit
- 3: Fahrzeuginformation
- 4: auf Fahrzeuginformation bezogene Verkehrsregeln
- 5: Erfassungseinheit
- 6: Schnittstelle der Erfassungseinheit
- 7: Berechnungsmodul
- 8: Navigationseinheit
- 9: Verkehrsregelspeicher
- 10: Anfragesignal
- 11: Verkehrsregelspeicher
- 12: Antwortsignal
- 13: erste Internetverbindung
- 13': zweite Internetverbindung
- 14: Verbindung
- 15: Schnittstelle der Navigationseinheit
- 16: Informationssignal
- 17: Internetfähiges Gerät
- 100: Verfahren zur Navigation eines Fahrzeugs
- 101: Erfassen von Fahrzeuginformation
- 102: Senden von Fahrzeuginformation an die Verwaltungseinheit
- 103: Speichern von Fahrzeuginformation auf der Verwaltungseinheit
- 104: Senden einer Anfrage an die Verwaltungseinheit
- 105: Identifikation von auf Fahrzeuginformation bezogenen Verkehrsregeln
- 106: Berechnen von Navigationsinformation
- 107: Ausgeben von Navigationsinformation

## Patentansprüche

1. System zur Navigation eines Fahrzeugs (1), aufweisend:
- eine außerhalb des Fahrzeugs (1) angeordnete Verwaltungseinheit (2) zur zentralen Speicherung von Fahrzeuginformation (3) und von auf Fahrzeuginformation (3) bezogene Verkehrsregeln (4), wobei die Verkehrsregeln (4) insbesondere die Sperrung von Straßen betreffen und der Fahrzeuginformation (3) zugeordnet sind;
- eine Erfassungseinheit (5), welche eine Schnittstelle (6) zum Erfassen von Fahrzeuginformation (3) des Fahrzeugs (1), welche mindestens eine Fahrzeugidentifikationsnummer enthält, aufweist, und welche dazu ausgebildet ist, die erfasste Fahrzeuginformation (3) des Fahrzeugs (1) an die Verwaltungseinheit (2) zu senden;
- ein Berechnungsmodul (7) zur Berechnung von Navigationsinformation, welches dazu ausgebildet ist, Navigationsdaten und auf der Verwaltungseinheit (2) gespeicherte, auf Fahrzeuginformation (3) des Fahrzeugs (1) bezogene Verkehrsregeln (4) in die Berechnung der Navigationsinformation mit einzubeziehen, sodass dadurch Straßen, welche das Fahrzeug (1) nicht befahren darf, nicht mit in die Berechnung der Navigationsinformation einbezogen werden, wobei die Berechnung der Navigationsinformation eine Routenplanung ist, wobei die Navigationsdaten einen Standort des Fahrzeugs (1) und einen Zielort als Eingabe eines Benutzers umfassen; und
- eine Navigationseinheit (8), welche im Fahrzeug (1) angeordnet ist, zur Ausgabe von durch das Berechnungsmodul (7) berechneter Navigationsinformation, wobei die Navigationseinheit (8) eine Schnittstelle (15) aufweist, die dazu ausgebildet ist, den Zielort als Eingabe des Benutzers zu erfassen und die Fahrzeugidentifikationsnummer zu erfassen und zu speichern, und die Navigationseinheit (8) dazu eingerichtet ist, ein Anfragesignal (10), welches die Fahrzeugidentifikationsnummer enthält, an die Verwaltungseinheit (2) zu senden.

2. System zur Navigation eines Fahrzeugs (1) nach Anspruch 1, wobei die Verwaltungseinheit (2) das Berechnungsmodul (7) aufweist und die Navigationseinheit (8) dazu ausgebildet ist, die von dem Berechnungsmodul (7) unter Einbeziehung der auf Fahrzeuginformation (3) des Fahrzeugs (1) bezogenen Verkehrsregeln (4) berechnete Navigationsinformation zu empfangen.

3. System zur Navigation eines Fahrzeugs (1) nach Anspruch 1, wobei die Navigationseinheit (8) das Berechnungsmodul (7) aufweist und dazu ausgebildet ist, die von der Verwaltungseinheit (2) gespeicherten, auf Fahrzeuginformation (3) des Fahrzeugs (1) bezogenen Verkehrsregeln (4) zu empfangen.

4. System zur Navigation eines Fahrzeugs (1) nach einem der vorangehenden Ansprüche, wobei die Erfassungseinheit (5) dazu ausgebildet ist, ein Fahrzeugkennzeichen als Fahrzeugidentifikationsnummer zu erfassen oder neben der Fahrzeugidentifikationsnummer ein Fahrzeugkennzeichen als Fahrzeuginformation (3) zu erfassen.

5. System zur Navigation eines Fahrzeugs (1) nach einem der vorangehenden Ansprüche, wobei die Erfassungseinheit (5) dazu ausgebildet ist, neben der Fahrzeugidentifikationsnummer mindestens eine Motorspezifikation als Fahrzeuginformation (3) zu erfassen.

6. System zur Navigation eines Fahrzeugs (1) nach einem der vorrangehenden Ansprüche, wobei die Schnittstelle (6) der Erfassungseinheit (5) als Eingabemaske eines Internetportals ausgebildet ist.

7. System zur Navigation eines Fahrzeugs (1) nach einem der Ansprüche 1 bis 5, wobei die Erfassungseinheit (5) ein Teil der Navigationseinheit (8) ist.

8. Verfahren (100) zur Navigation eines Fahrzeugs (1), welches die folgenden Arbeitsschritte aufweist:
- Erfassen (101) von Fahrzeuginformation (3) des Fahrzeugs (1), welche mindestens eine Fahrzeugidentifikationsnummer enthält, durch eine Erfassungseinheit (2);
- Senden (102) der erfassten Fahrzeuginformation (3) des Fahrzeugs (1) an eine externe Verwaltungseinheit (2), auf welcher auf Fahrzeuginformation (3) bezogene Verkehrsregeln (4) gespeichert sind;
- Speichern (103) der erfassten Fahrzeuginformation (3) des Fahrzeugs (1) auf der Verwaltungseinheit (2);
- Zuordnen der Verkehrsregeln (4) zu der Fahrzeuginformation (3);
- Erfassen und Speichern der Fahrzeugidentifikationsnummer mittels einer Schnittstelle (15) einer im Fahrzeug (1) angeordneten Navigationseinheit (8);
- Erfassen eines Zielorts als Eingabe eines Benutzers mittels der Schnittstelle (15);
- Senden eines Anfragesignals (10), welches die Fahrzeugidentifikationsnummer enthält, an die Verwaltungseinheit (2);
- Berechnen (106) von Navigationsinformation unter Berücksichtigung von Navigationsdaten und der auf der Verwaltungseinheit (2) gespeicherten, auf Fahrzeuginformation (3) des Fahrzeugs (1) bezogenen Verkehrsregeln (4) durch ein Berechnungsmodul (7), sodass dadurch Straßen, welche das Fahrzeug (1) nicht befahren darf, nicht mit in das Berechnen (106) der Navigationsinformation einbezogen werden, wobei das Berechnen (106) der Navigationsinformation eine Routenplanung ist, wobei die Navigationsdaten einen Standort des Fahrzeugs (1) und den Zielort umfassen; und
- Ausgeben (107) der durch das Berechnungsmodul (7) berechneten Navigationsinformation durch die Navigationseinheit (8) im Fahrzeug (1).

9. Verfahren (100) zur Navigation eines Fahrzeugs (1) nach Anspruch 8, wobei die Verwaltungseinheit (2) das Berechnungsmodul (7) aufweist und die Navigationseinheit (8) im Fahrzeug (1) das Anfragesignal (10) zum Berechnen (106) und Senden von Navigationsinformation, welche auf Fahrzeuginformation (3) des Fahrzeugs (1) bezogene Verkehrsregeln (4) berücksichtigt, an die Verwaltungseinheit (2) sendet (104), woraufhin das Berechnungsmodul (7) der Verwaltungseinheit (2) die Navigationsinformation unter Berücksichtigung der auf Fahrzeuginformation (3) des Fahrzeugs (1) bezogenen Verkehrsregeln (4) berechnet (106) und an die Navigationseinheit (8) sendet.

10. Verfahren (100) zur Navigation eines Fahrzeugs (1) nach Anspruch 8, wobei die Navigationseinheit (8) im Fahrzeug (1) das Berechnungsmodul (7) aufweist und das Anfragesignal (10) zum Senden von auf der Verwaltungseinheit (2) gespeicherten, auf Fahrzeuginformation (3) des Fahrzeugs (1) bezogene Verkehrsregeln (4) durch die Verwaltungseinheit (2) an die Verwaltungseinheit (2) sendet (104), woraufhin die Verwaltungseinheit (2) auf Fahrzeuginformation (3) des Fahrzeugs (1) bezogene Verkehrsregeln (4) an die Navigationseinheit (8) sendet und das Berechnungsmodul (7) der Navigationseinheit (8) die Navigationsinformation unter Berücksichtigung der empfangenen, auf Fahrzeuginformation (3) des Fahrzeugs (1) bezogenen Verkehrsregeln (4) berechnet (106).

11. Verfahren (100) zur Navigation eines Fahrzeugs (1) nach Anspruch 9 oder 10, wobei die Navigationseinheit (8) die Identifikationsnummer des Fahrzeugs (1) zusammen mit dem Anfragesignal (10) sendet (104), und die Verwaltungseinheit (2) die auf Fahrzeuginformation (3) des Fahrzeugs (1) bezogenen Verkehrsregeln (4) anhand der Fahrzeugidentifikationsnummer identifiziert (105) und an die Navigationseinheit (8) sendet oder unter deren Berücksichtigung Navigationsinformation durch die Berechnungseinheit (7) berechnet (106) und diese dann an die Navigationseinheit (8) sendet.

12. Verfahren (100) nach einem der Ansprüche 8 bis 11, wobei aktuelle, auf Fahrzeuginformation (3) bezogene Verkehrsregeln (4) auf der Verwaltungseinheit (2) gespeichert und/oder aktualisiert werden.

## Claims

1. System for navigating a vehicle (1), having:
- a management unit (2), arranged outside the vehicle (1), for centrally storing vehicle information (3) and traffic rules (4) referring to vehicle information (3), the traffic rules (4) relating in particular to the closure of roads and being associated with the vehicle information (3);
- a capture unit (5), which has an interface (6) for capturing vehicle information (3) of the vehicle (1) containing at least one vehicle identification number, and which is configured to send the captured vehicle information (3) of the vehicle (1) to the management unit (2) ;
- a computation module (7) for computing navigation information, which computation module is configured to also include navigation data and traffic rules (4), which are stored on the management unit (2) and refer to vehicle information (3) of the vehicle (1), in the computation of the navigation information, with the result that roads that the vehicle (1) is not permitted to use are therefore not also included in the computation of the navigation information, the computation of the navigation information being route planning, the navigation data comprising a location of the vehicle (1) and a destination as input from a user; and
- a navigation unit (8), arranged in the vehicle (1), for outputting navigation information computed by the computation module (7), the navigation unit (8) having an interface (15) configured to capture the destination as input from the user and to capture and store the vehicle identification number, and the navigation unit (8) being designed to send a request signal (10) containing the vehicle identification number to the management unit (2).

2. System for navigating a vehicle (1) according to Claim 1, wherein the management unit (2) has the computation module (7), and the navigation unit (8) is configured to receive the navigation information computed by the computation module (7) by including the traffic rules (4) referring to vehicle information (3) of the vehicle (1).

3. System for navigating a vehicle (1) according to Claim 1, wherein the navigation unit (8) has the computation module (7) and is configured to receive the traffic rules (4) stored by the management unit (2) that refer to vehicle information (3) of the vehicle (1).

4. System for navigating a vehicle (1) according to one of the preceding claims, wherein the capture unit (5) is configured to capture a vehicle registration number as vehicle identification number or to capture a vehicle registration number as vehicle information (3) besides the vehicle identification number.

5. System for navigating a vehicle (1) according to one of the preceding claims, wherein the capture unit (5) is configured to capture at least one engine specification as vehicle information (3) besides the vehicle identification number.

6. System for navigating a vehicle (1) according to one of the preceding claims, wherein the interface (6) of the capture unit (5) is in the form of an input mask of an Internet portal.

7. System for navigating a vehicle (1) according to the one of Claims 1 to 5, wherein the capture unit (5) is a part of the navigation unit (8).

8. Method (100) for navigating a vehicle (1), having the following work steps:
- capturing (101) vehicle information (3) of the vehicle (1), containing at least one vehicle identification number, by way of a capture unit (2);
- sending (102) the captured vehicle information (3) of the vehicle (1) to an external management unit (2) on which traffic rules (4) referring to vehicle information (3) are stored;
- storing (103) the captured vehicle information (3) of the vehicle (1) on the management unit (2);
- associating the traffic rules (4) with the vehicle information (3);
- capturing and storing the vehicle identification number by means of an interface (15) of a navigation unit (8) arranged in the vehicle (1);
- capturing a destination as input from a user by means of the interface (15);
- sending a request signal (10) containing the vehicle identification number to the management unit (2);
- computing (106) navigation information in consideration of navigation data and the traffic rules (4) stored on the management unit (2) that refer to vehicle information (3) of the vehicle (1) by way of a computation module (7), with the result that roads that the vehicle (1) is not permitted to use are therefore not also included in the computation (106) of the navigation information, the computation (106) of the navigation information being route planning, the navigation data comprising a location of the vehicle (1) and the destination; and
- outputting (107) the navigation information computed by the computation module (7) by way of the navigation unit (8) in the vehicle (1).

9. Method (100) for navigating a vehicle (1) according to Claim 8, wherein the management unit (2) has the computation module (7), and the navigation unit (8) in the vehicle (1) sends (104) to the management unit (2) the request signal (10) to compute (106) and send navigation information that takes into consideration traffic rules (4) referring to vehicle information (3) of the vehicle (1), whereupon the computation module (7) of the management unit (2) computes (106) the navigation information in consideration of the traffic rules (4) referring to vehicle information (3) of the vehicle (1) and sends said navigation information to the navigation unit (8).

10. Method (100) for navigating a vehicle (1) according to Claim 8, wherein the navigation unit (8) in the vehicle (1) has the computation module (7) and sends (104) to the management unit (2) the request signal (10) for the management unit (2) to send traffic rules (4) stored on the management unit (2) that refer to vehicle information (3) of the vehicle (1), whereupon the management unit (2) sends traffic rules (4) referring to vehicle information (3) of the vehicle (1) to the navigation unit (8), and the computation module (7) of the navigation unit (8) computes (106) the navigation information in consideration of the received traffic rules (4) referring to vehicle information (3) of the vehicle (1).

11. Method (100) for navigating a vehicle (1) according to Claim 9 or 10, wherein the navigation unit (8) sends (104) the identification number of the vehicle (1) together with the request signal (10), and the management unit (2) identifies (105) the traffic rules (4) referring to vehicle information (3) of the vehicle (1) on the basis of the vehicle identification number and sends said traffic rules to the navigation unit (8) or takes them into consideration to compute (106) navigation information by way of the computation unit (7) and then sends said navigation information to the navigation unit (8) .

12. Method (100) according to one of Claims 8 to 11, wherein current traffic rules (4) referring to vehicle information (3) are stored and/or updated on the management unit (2).

## Revendications

1. Système destiné à la navigation d'un véhicule (1), comportant :
- une unité de gestion (2) disposée en dehors du véhicule (1) et destinée à la mémorisation centrale d'informations de véhicule (3) et de règles de circulation (4) se rapportant aux informations de véhicule (3), les règles de circulation (4) concernant en particulier la fermeture de routes et étant associées aux informations de véhicule (3) ;
- une unité de détection (5) qui comporte une interface (6) pour détecter des informations de véhicule (3) du véhicule (1), lesquelles contiennent au moins un numéro d'identification du véhicule, et qui est conçue pour envoyer à l'unité de gestion (2) les informations de véhicule (3) détectées du véhicule (1) ;
- un module de calcul (7) pour calculer des informations de navigation, lequel est conçu pour intégrer dans le calcul des informations de navigation des données de navigation et des règles de circulation (4) mémorisées sur l'unité de gestion (2) et se rapportant à des informations de véhicule (3) du véhicule (1), de sorte que des rues sur lesquelles le véhicule (1) n'est pas autorisé à circuler ne sont pas prises en compte dans le calcul des informations de navigation, le calcul des informations de navigation étant une planification d'itinéraire, les données de navigation comprenant une localisation du véhicule (1) et une destination en tant qu'entrée d'un utilisateur ; et
- une unité de navigation (8) qui est disposée dans le véhicule (1) et qui sert à fournir en sortie des informations de navigation calculées par le module de calcul (7), l'unité de navigation (8) comportant une interface (15) qui est conçue pour détecter la destination en tant qu'entrée de l'utilisateur et pour détecter et mémoriser le numéro d'identification du véhicule, et l'unité de navigation (8) étant conçue pour envoyer à l'unité de gestion (2) un signal de demande (10) qui contient le numéro d'identification du véhicule.

2. Système destiné à la navigation d'un véhicule (1) selon la revendication 1, dans lequel l'unité de gestion (2) comporte le module de calcul (7) et l'unité de navigation (8) est conçue pour recevoir les informations de navigation calculées par le module de calcul (7) en tenant compte des règles de circulation (4) se rapportant aux informations de véhicule (3) du véhicule (1).

3. Système destiné à la navigation d'un véhicule (1) selon la revendication 1, dans lequel l'unité de navigation (8) comporte le module de calcul (7) et est conçue pour recevoir les règles de circulation (4) mémorisées par l'unité de gestion (2) et se rapportant aux informations de véhicule (3) du véhicule (1).

4. Système destiné à la navigation d'un véhicule (1) selon l'une des revendications précédentes, dans lequel l'unité de détection (5) est conçue pour détecter un numéro d'immatriculation du véhicule en tant que numéro d'identification du véhicule ou pour détecter, en plus du numéro d'identification du véhicule, un numéro d'immatriculation du véhicule en tant qu'information de véhicule (3).

5. Système destiné à la navigation d'un véhicule (1) selon l'une des revendications précédentes, dans lequel l'unité de détection (5) est conçue pour détecter, en plus du numéro d'identification du véhicule, au moins une spécification du moteur en tant qu'information de véhicule (3).

6. Système destiné à la navigation d'un véhicule (1) selon l'une des revendications précédentes, dans lequel l'interface (6) de l'unité de détection (5) est réalisée sous la forme d'un masque de saisie d'un portail Internet.

7. Système destiné à la navigation d'un véhicule (1) selon l'une des revendications 1 à 5, dans lequel l'unité de détection (5) fait partie de l'unité de navigation (8) .

8. Procédé (100) destiné à la navigation d'un véhicule (1), lequel comporte les étapes de traitement suivantes :
- la détection (101), par une unité de détection (2), d'informations de véhicule (3) du véhicule (1), lesquelles contiennent au moins un numéro d'identification du véhicule ;
- l'envoi (102) des informations de véhicule (3) détectées du véhicule (1) à une unité de gestion externe (2), sur laquelle sont mémorisées des règles de circulation (4) se rapportant aux informations de véhicule (3) ;
- la mémorisation (103) des informations de véhicule (3) détectées du véhicule (1) sur l'unité de gestion (2) ;
- l'association des règles de circulation (4) aux informations de véhicule (3) ;
- la détection et la mémorisation du numéro d'identification du véhicule au moyen d'une interface (15) d'une unité de navigation (8) disposée dans le véhicule (1) ;
- la détection d'une destination en tant qu'entrée d'un utilisateur au moyen de l'interface (15) ;
- l'envoi d'un signal de demande (10) contenant le numéro d'identification du véhicule à l'unité de gestion (2) ;
- le calcul (106), par un module de calcul (7), d'informations de navigation en tenant compte de données de navigation et des règles de circulation (4) mémorisées sur l'unité de gestion (2) et se rapportant à des informations de véhicule (3) du véhicule (1), de sorte que des rues sur lesquelles le véhicule (1) n'est pas autorisé à circuler ne sont pas prises en compte dans le calcul (106) des informations de navigation, le calcul (106) des informations de navigation étant une planification d'itinéraire, les données de navigation comprenant une localisation du véhicule (1) et la destination ; et
- la fourniture en sortie (107), par l'unité de navigation (8) dans le véhicule (1), des informations de navigation calculées par le module de calcul (7).

9. Procédé (100) destiné à la navigation d'un véhicule (1) selon la revendication 8, dans lequel l'unité de gestion (2) comporte le module de calcul (7) et l'unité de navigation (8) dans le véhicule (1) envoie (104) à l'unité de gestion (2) le signal de demande (10) pour le calcul (106) et l'envoi d'informations de navigation, lesquelles tiennent compte de règles de circulation (4) se rapportant à des informations de véhicule (3) du véhicule (1), puis le module de calcul (7) de l'unité de gestion (2) calcule (106) les informations de navigation en tenant compte des règles de circulation (4) se rapportant aux informations de véhicule (3) du véhicule (1) et les envoie à l'unité de navigation (8).

10. Procédé (100) destiné à la navigation d'un véhicule (1) selon la revendication 8, dans lequel l'unité de navigation (8) comporte dans le véhicule (1) le module de calcul (7) et envoie (104) à l'unité de gestion (2) le signal de demande (10) pour l'envoi par l'unité de gestion (2) de règles de circulation (4) mémorisées sur l'unité de gestion (2) et se rapportant à des informations de véhicule (3) du véhicule (1), puis l'unité de gestion (2) envoie à l'unité de navigation (8) des règles de circulation (4) se rapportant à des informations de véhicule (3) du véhicule (1) et le module de calcul (7) de l'unité de navigation (8) calcule (106) les informations de navigation en tenant compte des règles de circulation (4) reçues et se rapportant à des informations de véhicule (3) du véhicule (1).

11. Procédé (100) destiné à la navigation d'un véhicule (1) selon la revendication 9 ou 10, dans lequel l'unité de navigation (8) envoie (104) le numéro d'identification du véhicule (1) en association avec le signal de demande (10), et l'unité de gestion (2) identifie (105) les règles de circulation (4) se rapportant à des informations de véhicule (3) du véhicule (1) à l'aide du numéro d'identification du véhicule et les envoie à l'unité de navigation (8) ou calcule (106) en tenant compte de ces dernières des informations de navigation au moyen de l'unité de calcul (7) puis les envoie à l'unité de navigation (8).

12. Procédé (100) selon l'une des revendications 8 à 11, dans lequel des règles de circulation (4) actuelles se rapportant à des informations de véhicule (3) sont mémorisées et/ou actualisées sur l'unité de gestion (2).
